# EUROPEAN PATENT SPECIFICATION

(11) **EP 1 088 438 B1**
(45) Date of publication and mention of the grant of the patent: **07.12.2005**
(21) Application number: 99931286.1
(22) Date of filing: 11.06.1999
(51) Int. Cl.: H04M 3/42

(54) **METHOD AND SYSTEM FOR THE CONTROL OF VOTING BY TELEPHONE**
VERFAHREN UND SYSTEM ZUR ABSTIMMUNGSSTEUERUNG ÜBER TELEFON
PROCEDE ET SYSTEME DE GESTION DU VOTE PAR TELEPHONE

(30) Priority: 16.06.1998 FI 981399
(43) Date of publication of application: 04.04.2001
(73) Proprietor: TeliaSonera Finland Oyj, 00510 Helsinki (FI)
(72) Inventor: LAHTINEN, Pasi, FIN-00390 Helsinki (FI)
(74) Representative: Simmelvuo, Markku Kalevi
(86) International application number: PCT/FI1999/000512
(87) International publication number: WO 1999/066701

(56) References cited:
- EP-A1- 0 917 333
- US-A- 4 290 141

## Description

### FIELD OF THE INVENTION

The present invention concerns a method for controlling telephonic voting as defined in the preamble of claim 1 for and to a system for controlling telephonic voting as defined in the preamble of claim 6.

### BACKGROUND OF THE INVENTION

Traditionally, a problem with voting by telephone is congestion of the network. When the telephone numbers used to receive the votes are announced in a radio or television broadcast, the result is generally that a large number of people try to call those numbers at the same time, thus overloading the network. The only solution to this problem so far has been to design the programmes so that the phone calls are not received all at the same time but as a steadier load.

Wireless voting systems are also known from US 4290141, where each of the response units sends its vote during a different time interval.

### BRIEF DESCRIPTION OF THE INVENTION

The object of the present invention is to disclose a new type of method and system to eliminate the drawbacks described above.

A specific object of the present invention is to disclose a method and system which can be used to stagger the sending of votes in telephonic voting carried out using mobile stations so as to avoid overloading the network.

As for the features characteristic of the invention, reference is made to the claims.

In the system of the invention for controlling telephonic voting in a digital mobile communication network comprising one or more mobile stations, telephonic voting carried out using mobile stations is controlled. According to the invention, the system comprises a polling server, which is used to perform calculations regarding the reliability of the voting, on the basis of which a certain proportion of the mobile stations is authorised at a time to send votes. The reliability of the voting and the proportion of mobile stations authorised are defined statistically. If during a first round e.g. every hundredth mobile station number is authorised to send a vote and only 100 votes are received, then in the next round e.g. every tenth mobile station is authorised to send a vote, which means that another 1000 votes are likely to be received. When about 2000 votes or 20% of the total number has been received, the voting result is statistically true with an accuracy of 0.1 - 0.5 %.

Further, according to the invention, the system comprises a control channel which is used to transmit a voting authorisation from a polling server to mobile stations to be authorised to send a vote. The system of the invention further comprises a voting application which is used to monitor messages transmitted in the control channel and to send a vote after the authorisation has been received. The voting application is implemented in conjunction with the mobile stations.

As compared with prior art, the present invention has the advantage that it makes it possible to stagger the sending of votes in telephonic polling via mobile stations. This obviates network overloading. The voting result can be predicted, and the poll is statistically fully reliable even if only e.g. ten percent of the votes are really sent to the polling server and the rest is not sent at all. The voting can be controlled and limited to a very narrow range of time, but even so there may be a large number of voters because the control of the service is with the polling server.

In an embodiment of the invention, the control channel is a Cell Broadcast channel.

In an embodiment of the invention, the voting authorisation is given using a predetermined protocol.

In an embodiment of the invention, the vote is a SMS, USSD or other corresponding message (Short Message Service, SMS; Unstructured Supplementary Service Data, USSD).

In an embodiment of the invention, the mobile communication network is a GSM network or some other corresponding digital mobile communication network.

### DETAILED DESCRIPTION OF THE INVENTION

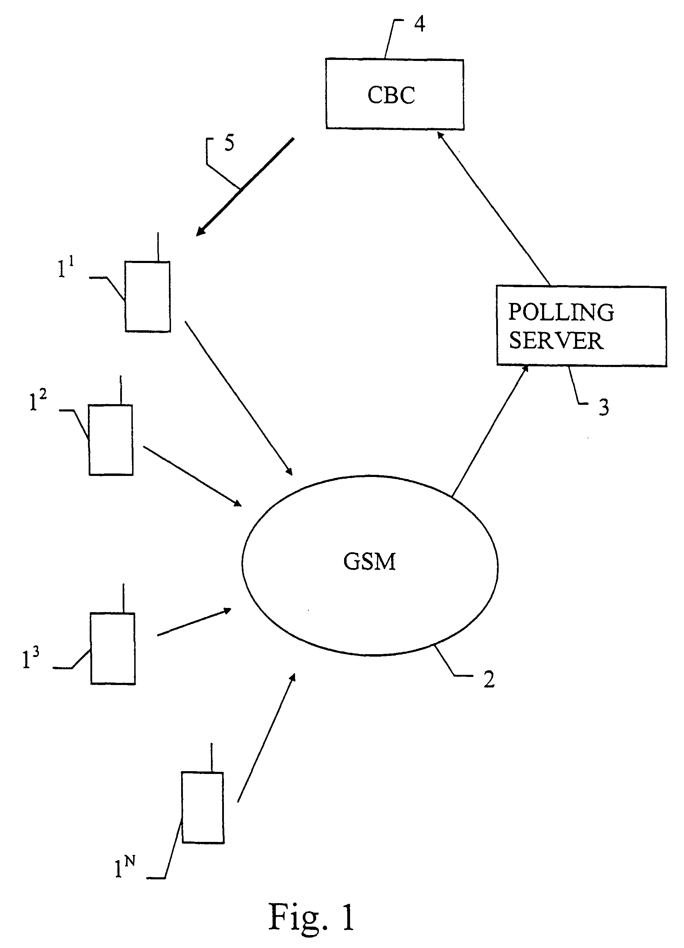

In the following, the invention will be described by the aid of a few examples of its embodiments with reference to the attached drawing, which presents an embodiment of the system of the invention.

According to the invention, a polling server 3, e.g. a work station computer, is connected to the GSM network 2. In addition, the polling server 3 is connected to a cell broadcast centre (CBC) 4. At first, using the polling server, e.g. every hundredth user is authorised to send a vote to the polling server. The vote can be sent from mobile stations 1¹, 1²,...1ⁿ e.g. in the form of an SMS short message, a USSD message or as some other type of data. The authority is given using a predetermined protocol, and the authorisation is transmitted using a predetermined CB channel 5 used as a control channel by the cell broadcast centre 4. Using voting applications 1¹, 1²,...1ⁿ implemented in conjunction with GSM telephones 1¹, 1²,...1ⁿ, the CB channel 5 in question is monitored to get any messages transmitted in it, which makes it possible to send the vote only after the authorisation has been received.

The polling server 3 controls the CB channel 5 and makes calculations to determine the reliability of the poll. If the first round yields only a hundred votes, then for the next round e.g. every tenth mobile station is authorised to send a vote, which is likely to result in a thousand more votes received. The mobile stations to be authorised can be selected e.g. on the basis of a range of numbers or a user group. Authorisations to vote are granted until all votes have been gathered. When about 2000 votes or 20% of the total number has been received, the result of the poll is statistically true with an accuracy of 0.1 - 0.5 %. Thus, an accurate forecast is obtained soon after the beginning of the polling.

The invention is not restricted to the examples of its embodiments described above, but many variations are possible within the scope of the inventive idea defined in the claims.

## Claims

1. Method for controlling telephonic voting in a digital mobile communication network (2) comprising one or more mobile stations (1¹, 1²,...1ⁿ), in which method telephonic voting performed using mobile stations (1¹, 1²,...1ⁿ) is controlled, **characterised in that**
calculations are made by means of a polling server (3) to determine the statistical reliability of the voting, based on which a certain proportion of the mobile stations (1¹,1²,...,1ⁿ) at a time is authorised to send a vote;
voting authorisation is transmitted over a control channel (5) to the authorised mobile stations, and
using a voting application (1¹,1²,...,1ⁿ), the control channel (5) is monitored and a vote is sent after the authorisation has been received.

2. Method as defined in claim 1, **characterised in that** the control channel (5) is a Cell Broadcast channel.

3. Method as defined in claim 1 or 2, **characterised in that** the voting authorisation is given using a predetermined protocol.

4. Method as defined in any one of the preceding claims 1 - 3, **characterised in that** the vote is an SMS, USSD or corresponding message.

5. Method as defined in any one of the preceding claims 1 - 4, **characterised in that** the mobile communication network (2) is a GSM network or equivalent.

6. System for controlling telephonic voting in a digital mobile communication network (2) comprising one or more mobile stations (1¹, 1²,...1ⁿ), in which system telephonic voting performed using mobile stations (1¹, 1²,...1ⁿ) is controlled, **characterised in that**
the system comprises a polling server (3), which is used for making calculations regarding the statistical reliability of the voting, based on which a certain proportion of the mobile stations (1¹,1²,...,1ⁿ) at a time is authorised to send a vote;
the system comprises a control channel (5), which is used for transmitting a voting authorisation to the authorised mobile stations; and
the system comprises a voting application (1¹,1²,...,1ⁿ) by means of which the control channel (5) is monitored and a vote is sent after the authorisation has been received.

7. System as defined in claim 6, **characterised in that** the control channel (5) is a Cell Broadcast channel.

8. System as defined in claim 6 or 7, **characterised in that** a predetermined protocol is used for giving the voting authorisation.

9. System as defined in any one of the preceding claims 6 - 8, **characterised in that** the vote is an SMS, USSD or corresponding message.

10. System as defined in any one of the preceding claims 6 - 9, **characterised in that** the mobile communication network (2) is a GSM network or equivalent.

## Patentansprüche

1. Verfahren zum Steuern einer telefonischen Abstimmung bzw. Stimmabgabe in einem digitalen mobilen Kommunikationsnetzwerk (2), welches eine oder mehrere Mobilstationen (1¹, 1², ..., 1ⁿ) aufweist, in welchem Verfahren die durchgeführte telefonische Stimmabgabe durch Benutzen der mobilen Stationen (1¹, 1², ..., 1ⁿ) gesteuert wird, **dadurch gekennzeichnet, dass**:
Berechnungen mit Hilfe eines Abfrageservers (3) durchgeführt werden, um die statistische Zuverlässigkeit der Stimmabgabe zu bestimmen, wobei basierend darauf ein gewisser Teil der Mobilstationen (1¹, 1², ..., 1ⁿ) zu einer Zeit autorisiert wird, eine abgegebene Stimme zu senden; das Autorisieren der Stimmabgabe über einen Steuerkanal (5) an die autorisierten Mobilstationen gesendet wird, und durch das Nutzen einer Stimmabgabeanwendung (1¹, 1², ..., 1ⁿ) der Steuerkanal (5) überwacht wird und eine abgegebene Stimme gesandt wird, nachdem das Autorisieren empfangen wurde.

2. Verfahren nach Anspruch 1, **dadurch gekennzeichnet, dass** der Steuerkanal (5) ein Zellenverteilungskommunikationskanal ist.

3. Verfahren nach Anspruch 1 oder 2, **dadurch gekennzeichnet, dass** das Autorisieren der Stimmabgabe durch Nutzen eines vorher festgelegten Protokolls gegeben ist.

4. Verfahren nach einem der vorausgehenden Ansprüche 1-3, **dadurch gekennzeichnet, dass** die abgegebene Stimme eine SMS-, USSD- oder entsprechende Nachricht ist.

5. Verfahren nach einem der vorausgehenden Ansprüche 1-4, **dadurch gekennzeichnet, dass** das mobile Kommunikationsnetzwerk (2) ein GSM-Netzwerk oder ein äquivalentes Netzwerk ist.

6. System zum Steuern einer telefonischen Stimmabgabe in einem digitalen mobilen Kommunikationsnetzwerk (2), welches eine oder mehrere mobile Stationen (1¹, 1², ..., 1ⁿ) aufweist, wobei in dem System das durchgeführte telefonische Abstimmen durch Nutzen mobiler Stationen (1¹, 1², ..., 1ⁿ) gesteuert wird, **dadurch gekennzeichnet, dass**
das System einen Abfrageserver (3) aufweist, welcher zum Ausführen von Berechnungen benutzt wird, welche die statistische Zuverlässigkeit der Stimmabgabe betreffen, darauf basierend, dass ein gewisser Teil der mobilen Stationen (1¹, 1², ..., 1ⁿ) zu einer Zeit autorisiert ist, eine abgegebene Stimme zu senden;
das System einen Steuerkanal (5) aufweist, welcher zum Senden einer Stimmabgabeautorisierung an autorisierte Mobilstationen genutzt wird; und
das System eine Stimmabgabeanwendung (1¹, 1², ..., 1ⁿ) aufweist, mit welcher der Steuerkanal (5) überwacht wird, und eine abgegebene Stimme gesendet wird, nachdem die Autorisierung empfangen wurde.

7. System nach Anspruch 6, **dadurch gekennzeichnet, dass** der Steuerkanal (5) ein Zellkommunikationsverteilungskanal ist.

8. System nach Anspruch 6 oder 7, **dadurch gekennzeichnet, dass** ein vorher festgelegtes Protokoll für das Abgeben der Autorisierung der Stimmabgabe benutzt wird.

9. System nach einem der vorausgehenden Ansprüche 6-8, **dadurch gekennzeichnet, dass** die abgegebene Stimme eine SMS-, USSD- oder entsprechende Nachricht ist.

10. System nach einem der vorausgehenden Ansprüche 6-9, **dadurch gekennzeichnet, dass** das Telekommunikationsnetzwerk (2) ein GSM-Netzwerk oder ein äquivalentes Netzwerk ist.

## Revendications

1. Procédé pour commander un vote téléphonique dans un réseau de transmission mobile numérique (2) comportant une ou plusieurs stations mobiles (1¹, 1²,... 1ⁿ), procédé dans lequel un vote téléphonique effectué en utilisant des stations mobiles (1¹, 1²,... 1ⁿ) est commandé, **caractérisé en ce que**
on réalise des calculs à l'aide d'un serveur de vote (3) pour déterminer la fiabilité statistique du vote, basée sur le fait qu'une certaine proportion des stations mobiles (1¹, 1²,... 1ⁿ) est, à un instant donné, autorisée à envoyer un vote;
on transmet une autorisation de vote sur un canal de commande (5) aux stations mobiles autorisées, et
on surveille le canal de commande (5) et on envoie un vote après que l'autorisation ait été reçue, en utilisant un applicatif de vote (1¹, 1²,... 1ⁿ),

2. Procédé selon la revendication 1, **caractérisée en ce que** le canal de commande (5) est un canal de diffusion de cellule "Cell Broadcast".

3. Procédé selon la revendication 1 ou 2, **caractérisé en ce que** l'autorisation de vote est donnée en utilisant un protocole prédéterminé.

4. Procédé selon l'une quelconque des revendications précédentes 1 - 3, **caractérisé en ce que** le vote est un SMS, un USSD ou un message correspondant.

5. Procédé selon l'une quelconque des revendications précédentes 1 - 4, **caractérisé en ce que** le réseau de transmission mobile (2) est un réseau GSM ou équivalent.

6. Système pour commander un vote téléphonique dans un réseau de transmission mobile numérique (2) comportant une ou plusieurs stations mobiles (1¹, 1²,... 1ⁿ), système dans lequel un vote téléphonique effectué en utilisant des stations mobiles (1¹, 1²,... 1ⁿ) est commandé, **caractérisé en ce que**
le système comporte un serveur de vote (3), qui est utilisé pour effectuer des calculs concernant la fiabilité statistique du vote, basés sur le fait qu'une certaine proportion des stations mobiles (1¹, 1²,... 1ⁿ) à un instant donné est autorisée à envoyer un vote;
le système comporte un canal de commande (5), qui est utilisé pour transmettre une autorisation de vote aux stations mobiles autorisées; et
le système comporte un applicatif de vote (1¹, 1²,... 1ⁿ) au moyen duquel le canal de commande (5) est surveillé et un vote est envoyé après que l'autorisation ait été reçue.

7. Système comme défini dans la revendication 6, **caractérisée en ce que** le canal de commande (5) est un canal de diffusion de cellule "Cell Broadcast".

8. Système selon l'une des revendications 6 ou 7, **caractérisé en ce qu'**un protocole prédéterminé est employé pour donner l'autorisation de vote.

9. Système selon l'une quelconque des revendications précédentes 6 - 8, **caractérisé en ce que** le vote est un SMS, un USSD ou un message correspondant.

10. Système selon l'une quelconque des revendications précédentes 6 - 9, **caractérisé en ce que** le réseau de transmission mobile (2) est un réseau de GSM ou équivalent.
